# EUROPEAN PATENT APPLICATION

(11) **EP 4 660 617 A1**
(43) Date of publication of application: **10.12.2025**
(21) Application number: 24185716.8
(22) Date of filing: 01.07.2024
(51) Int. Cl.: G01N 21/88, G01M 11/02, G01N 21/896, G01N 21/958

(54) **METHOD AND SYSTEM FOR INSPECTING TRANSPARENT OBJECTS**

(30) Priority: 05.06.2024 EP 24180338
(71) Applicant: Hexagon Technology Center GmbH, 9435 Heerbrugg (CH)
(72) Inventor: MÄKIRANTA, Antti, 24280 Salo (FI)
(74) Representative: Kaminski Harmann

(57) **Abstract**

The invention pertains to an inspection system for detecting defects (11) in a transparent object (10), the system comprising at least one imaging unit (108), one or more light sources (109) and at least one dark background (110) that are arranged around an inspection position for inspection of the transparent object. The light sources are configured emit light (119) to illuminate the transparent object at least from a first side of the object when the object is positioned at the inspection position. The imaging unit is configured and arranged relative to the inspection position to capture one or more images (12) of the transparent object from a second side of the object when the object is positioned at the inspection position, and configured to generate image data. The dark background is arranged so that the inspection position lies between the at least one imaging unit and the at least one dark background. The system comprises a computing unit configured to receive the image data and to detect, in the image data, one or more indications of scattered light (109') deflected from a defect in the transparent object. The invention also pertains to a method for detecting defects in a transparent object using such a system.

## Description

The present invention relates to a method and a system for visually inspecting transparent objects and for detecting defects in the transparent objects.

It is customary practice to inspect workpieces subsequent to their production to prevent that defect workpieces are delivered or assembled. Transparent objects come in various shapes and sizes, from lenses used in eyeglasses and microscopes or polarizer films used in smartphone displays to large glass sheets used for windowpanes, for example. Such transparent objects could have vital roles in everyday life of its user as they are dependent on the object having optimal performance. However, transparent objects can come in different sizes making it difficult to efficiently inspect any defects such as scratches, deformities or identifying structural problems inside a transparent object. Manual inspection often leads to human error and can ultimately affect the quality of the product.

Arrangements for optical measurements are disclosed, for instance in WO 2013/102572 A1 and WO 2023/139136 A1. Prior art recognizes inspection of glossy or partially reflective objects, such as substrates painted to the surface of a solid object. Illumination patterns or reflective screens can be used to identify any irregularities in the inspected objects using reflection and pattern distortion in the reflected light. However, such methods are not ideal for completely transparent objects as the defect might be inside the object in its structure and the pattern is not necessarily reflected adequately to a receiving image recorder.

Methods and devices for inspecting transparent objects in prior art often use bright backgrounds with a camera to capture still shots or video footage of defects with the help of illumination. The defects might show as opaque or dark in the captured images, depending on the orientation of the camera, illumination, and size of the defect. Additionally, defects show in different manner depending on whether the illuminated light is reflected to a surface or if the light is perpendicular to the transparent object. However, identifying defects on a bright background can prove inaccurate as opaque marks produced by impurities, defects or malformities can vary in size and distinctiveness.

It is an objective of the present disclosure to at least alleviate the problems described hereinabove and to provide an improved system and method for identifying defects in transparent objects.

It is a particular objective to provide such an improved system and method that are suitable for inspection of large quantities of similar objects in a short time.

It is a further objective to provide such an improved system and method that are suitable for completely automatic inspection of the objects.

At least one of these objectives is achieved by the inspection system of claim 1, the method of claim 13, and/or the dependent claims of the present invention.

A first aspect of the invention pertains to an inspection system for detecting defects in a transparent object. The system comprises at least one imaging unit (e.g., a camera), one or more light sources (e.g., a plurality of LEDs) and one or more dark backgrounds that are arranged around an inspection position for inspection of the transparent object. The light sources are configured to emit light to illuminate the transparent object at least from a first side of the object when the object is positioned at the inspection position. The at least one imaging unit is configured and arranged relative to the inspection position to capture one or more images of the transparent object from a second side of the transparent object (e.g., the side opposite to the first side) when the transparent object is positioned at the inspection position and configured to generate image data. The dark background is arranged so that the inspection position lies between the at least one imaging unit and the at least one dark background (i.e., so that the imaging unit sees the dark background through the transparent object). The inspection system further comprises a computing unit configured to receive the image data from the imaging unit(s) and to detect, in the image data, one or more indications of scattered light in the transparent object. The scattered light, being deflected from a defect in the transparent object, is indicative of said defect.

Preferably, the at least one imaging unit is arranged to capture the images with an oblique angle relative to the transparent object.

According to some embodiments, the system comprises a base having an opening (at least one opening), wherein the inspection position is at the opening, e.g., on top of the opening. The imaging unit is configured and arranged so that the opening lies in a field of view of the imaging unit. The dark background is formed and arranged so that it fills the field of view of the imaging unit (or, in case of more than one imaging units, the fields of view of the imaging units) through the opening.

According to some embodiments, the one or more light sources are configured and arranged so that no light is emitted directly onto the imaging unit(s). In embodiments comprising a base and opening(s), the base may prevent that direct light from the light sources reaches the imaging units.

Accordingto some embodiments, said base comprises at least two openings, each opening providing one inspection position. One or more imaging units, particularly at least two imaging units, are assigned to each opening and configured and arranged so that the respective opening lies in a field of view of each of the assigned imaging units, wherein each of the assigned imaging units is arranged at a different angle relative to the respective opening. Preferably, each imaging unit is arranged at an oblique angle, such as an angle greater than 5° relative to a transparent object positioned at the opening. One or more dark backgrounds are assigned to each opening (e.g., one background being assigned to each imaging unit) and formed and arranged so that the dark backgrounds fill the fields of view of the imaging units through the respective opening.

According to some embodiments of the inspection system, the dark background and at least a subset of the one or more light sources are positioned on a first side of the base, e.g. above the base, and the at least one imaging unit is positioned on a second side of the base, e.g. below the base.

According to some embodiments, the inspection system comprises a housing, the housing having an inner surface and defining an interior. At least the one or more light sources, the dark background and the inspection position are positioned in the interior. In some embodiments, also the imaging unit is positioned in the interior. Optionally, the imaging unit, the light sources and/or the dark background can be provided on the inner surface.

According to some embodiments of the inspection system, the light sources are configured as an illumination structure on the inner surface. For instance, the illumination structure may comprise a plurality of light emitting diodes (LEDs) and/or may be configured as an LED screen. Optionally, said illumination structure may provide continuous and uniform illuminance, illumination only to specific parts or illumination in changing patterns, such as sinusoidally changing fringe patterns. For instance, the illumination structure comprises a plurality of light emitting diodes, e.g. an LED screen. According to some embodiments, the illumination provided by the illumination structure can be selected by the computing unit and/or a user of the system. For instance, selecting the illumination may comprise selecting between continuous and uniform illuminance and illumination only to specific parts, selecting the patterns, and/or selecting certain parts of the illumination structure to emit light in a different wavelength and/or at different points of time. Optionally, the dark background may be a part of the illumination structure in which part the illumination has been turned off.

According to some embodiments of the inspection system, the housing comprises a recess extending away from the interior, and the dark background is provided on an inner surface of the recess. For instance, said recess may be configured as an indentation or as an opening in the housing. Preferably, the recess is configured and arranged (e.g., relative to the light sources) so that no light is emitted directly from the one or more light sources onto the dark background.

According to some embodiments of the inspection system, the housing is a tunnel-shaped housing or a dome-shaped housing, the base forming a bottom of the housing. According to other embodiments of the inspection system, the housing is a spherical housing, the base dividing the interior into a top part and a bottom part.

Accordingto some embodiments, the inspection system comprises transfer means configured to move the transparent object to the inspection position (and optionally also away from the inspection position). The transfer means may comprise a robot arm, a conveyor or similar means. Optionally, the imaging unit is configured to move relative to the inspection position, particularly at least by rotating about its imaging axis, and to capture images of the transparent object from a plurality of different poses.

According to some embodiments of the inspection system, the imaging unit is a camera, the one or more light sources comprise a plurality of light emitting diodes, and/or the dark background comprises one of a sheet, a slate or a screen.

According to some embodiments of the inspection system, the dark background comprises a computationally or manually controllable display. According to some embodiments of the inspection system, the dark background comprises a smart screen that is configured to adjust itself in relation to a surrounding illuminance.

A second aspect of the invention pertains to a method for detecting defects in a transparent object. The method makes use of an inspection system comprising an imaging unit, one or more light sources and a dark background that are arranged around an inspection position. The method comprises:
- positioningthe transparent object at the inspection position-for instance using automated transfer means of the system;
- illuminating the transparent object from at least a first side using the one or more light sources;
- capturing one or more images of the transparent object from a second side, wherein the dark background is visible through the transparent object in the one or more images; and
- determining, by a computing unit, whether scattered light is visible in the one or more images, the scattered light being indicative of a defect in the transparent object.

According to some embodiments of the method, the inspection system is an inspection system according to the first aspect of the invention. For instance, the computing unit may be a part of the inspection system. Optionally, the method comprises providing the inspection system.

Optionally, the automated transfer means may comprise a robotic arm or a conveyer.

According to some embodiments of the method, if it has been determined that scattered light is visible in the one or more images - thus indicating that the object has a defect -, the computing unit marks the transparent object as one of blocked, to be discarded, to be excluded from an assembly line, and to be scheduled for revision. Alternatively or additionally, the computing unit may provide feedback (e.g., comprising audio or visual alarm, text and/or images) regarding the defect to a human user of the system.

In some embodiments of the inspection system according to the first aspect of the invention, the system is configured to perform the method according to the second aspect.

The invention in the following will be described in detail by referring to exemplary embodiments that are accompanied by figures, in which:
- Figs. 1a-c: show an isometric view of a first embodiment of an inspection system according to the invention;
- Figs. 2a-d: illustrate the working principle of an exemplary embodiment of an inspection system according to the invention;
- Figs. 3a-b: show images captured by an imaging capturing unit of an exemplary embodiment of an inspection system according to the invention;
- Figs. 4a-d: show an isometric view of the inspection system of Figs. 1a-c, additionally showing the imaging unit's fields of view;
- Figs. 5a-d: show an isometric view of a second embodiment of an inspection system according to the invention;
- Figs. 6a-d: show an isometric view of the inspection system of Figs. 5a-d, additionally showing the imaging unit's fields of view;
- Figs. 7a-d: show an isometric view of a third embodiment of an inspection system according to the invention;
- Figs. 8a-d: show an isometric view of the inspection system of Figs. 7a-d, additionally showing the imaging unit's fields of view; and
- Fig. 9: shows a flow chart illustrating an exemplary embodiment of an inspection method according to the invention.

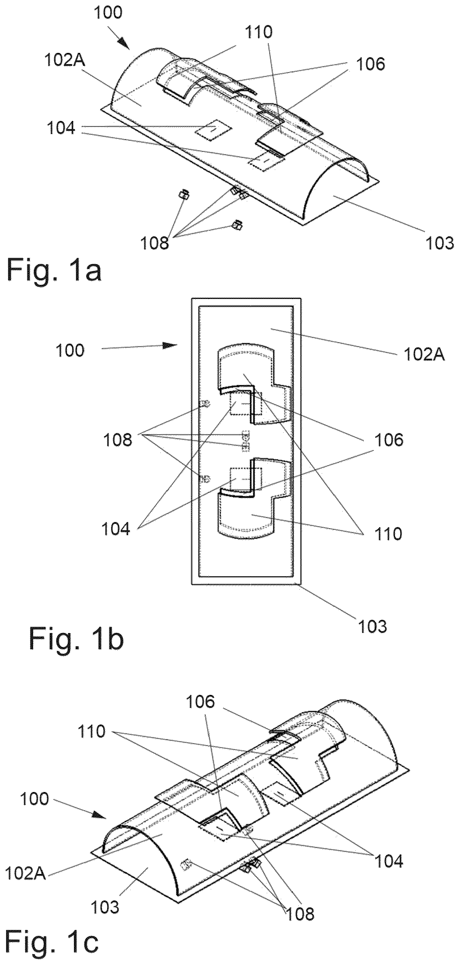

Figures 1a to 1c show three different views on a first exemplary embodiment of an inspection system 100 according to the invention, the system being configured for inspecting transparent target objects and for detecting defects in these objects, Figure 1b being a top-down view. The inspection system 100 may be part of or embodied as an Automated Optical Inspection (AOI) system. The AOI system may be configured for visual quality control of transparent products of any shape or specially configured for visual quality control of certain transparent products, e.g. for visual quality control of polarizer films. Although the disclosed solution is suitable for identifying defects in perfectly transparent objects, in some embodiments it may be used for semi-transparent objects as well.

In the shown embodiment, the inspection system 100 comprises a tunnel-shaped (e.g., half-cylindrical) housing 102A with a bottom 103 and two openings at the respective ends of the tunnel-shaped housing 102A. The shown system is configured so that a transparent target object (not shown here) may be positioned inside the device, and in particularly so that target objects may be moved through the device - for instance fully automatically to allow inspection of a plurality of identical objects in a short time.

One or more openings 104 are provided in the bottom as acquisition areas, wherein each target object may be positioned over one of these openings 104 for inspection (inspection position). The system 100 comprises one or more imaging units 108 (e.g., cameras), each being directed at one of the openings 104 for capturing one or more images of a target object when it is positioned at the respective opening 104. In the shown embodiment, the imaging units 108 are positioned below the bottom 103, i.e., configured to capture images of the target objects from below. At least one light emitting device is provided in the tunnel-shaped housing 102A, i.e. above the openings 104. Each light emitting device is configured to emit light in the direction of an object when positioned on one of the openings 104. The light emitting devices and the imaging units 108 are positioned and oriented relative to the openings 104 in such a way that no light is emitted from any one of the light emitting devices onto any one of the imaging units 108.

In the shown embodiment, the bottom 103 has two openings 104, two imaging units 108 being assigned to each opening 104, each imaging unit 108 placed at a different angle in relation to another and to an inspected transparent target object. Preferably, to allow detecting all kinds and orientations of defects in the object (i.e., defects effecting all kinds of deflection angles), the four imaging units 108 should be arranged correspondingly to cover all possible deflection angle. If only defects with particular deflection angles are of interest, then the imaging units 108 need to be placed only at these particular deflection angles.

In this embodiment, there are two recesses 106 in the upper part of the housing 102A, each comprising a dark background 110 having a shape so that the four imaging devices 108 below have their field of view completely filled by the at least one dark background 110 in the recesses 106.

One or more dark backgrounds 110 are provided at the tunnel-shaped housing 102A. Each background 110 is shaped and positioned relative to one of the openings 104 and the respective imaging units 108, so that the background 110 fills the field of view of each of the respective imaging units 108 through the opening 104. Thus, in an image taken by any one of the imaging units 108, the opening 104 appears dark. The "darkness" of the backgrounds 110 is to be understood in that they are at least substantially darker than the light emitting devices. In preferred embodiments, they do not emit any light (at least not in the same spectra as the light emitting devices). In addition, they are preferably dark coloured, such as, e.g., black, dark grey or dark brown, so that they are of low reflectance. For instance, the dark backgrounds 110 may have a reflectance of less than 0.5.

The dark backgrounds 110 preferably should be positioned, so that as few light as possible from the light sources 109 reaches the backgrounds. The more light from the light sources 109 reaches the dark backgrounds 110 due to the geometry of the system, the darker should be the backgrounds. Optionally, as shown here, the backgrounds can be provided in recesses 106 that form indentations or openings within the housing 102A. Thus, from the point of view of the imaging unit 108, the dark backgrounds 110 are provided behind the light sources 109. These recesses 106 may prevent or reduce light emitted from the light sources (direct light as well as scattered light) to reach the dark backgrounds 110. Alternatively, the dark background 110 can also be provided in front of the light sources 109 (from the point of view of the imaging unit 108), e.g., on a slate or tile that is positioned nearer to the opening 104 than the light sources 109.

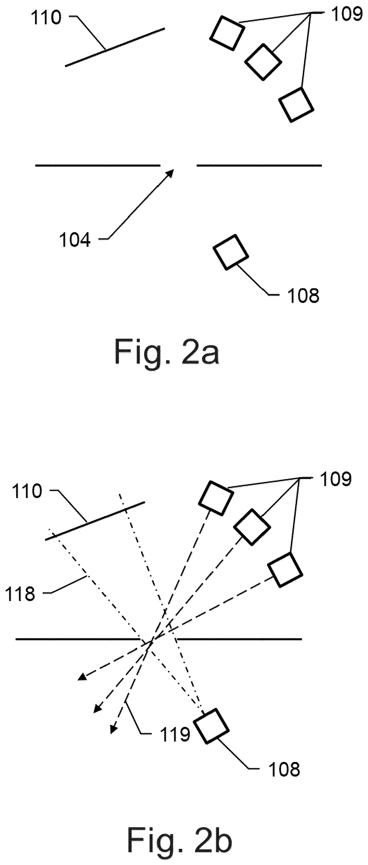

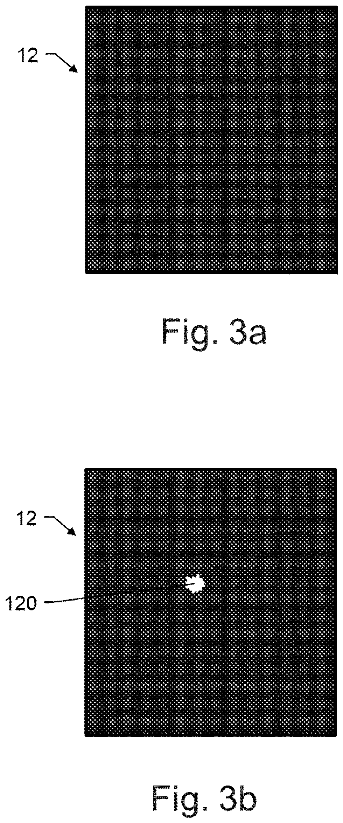

If a transparent object is placed on one of the openings 104 and illuminated by the light emitting devices, the respective imaging devices 108 take images of the object, wherein the object appears dark due to the dark background. If the object is flawless, no light from the light emitting devices will reach the imaging devices 108. However, if the object has a certain defect, this defect will deflect scattered light in a certain angle. An imaging device 108, which is positioned at the correct angle, will receive this scattered light, so that, while the object appears dark in the image, a bright spot will appear at the position of the defect. This is described in further detail below with respect to Figures 2a-d and 3a-b.

Preferably, a multitude of light emitting devices are provided that illuminate a target object from a multitude of different angles. Also, optionally, a plurality of imaging units 108 that capture images of the same target object can be provided. This ensures that a defect in the object will deflect a subset of the scattered light onto at least one imaging unit 108. In some embodiments, the inner surface of the tunnel-shaped housing 102A is configured as a continuous light emitting device, so that the housing 102A provides uniform lighting. In another embodiment, the tunnel-shaped housing 102A has a number of light sources (e.g. LEDs or other light-emitting devices) that create varied lighting inside the housing. For instance, the light sources can be provided all over the inside of the tunnel-shaped housing 102A (exempt from the dark backgrounds 110 and the recesses 106). Optionally, the whole inner surface of the housing 102A may be covered with light sources. For instance, the inner surface may comprise an LED screen. Dark backgrounds 110 may then be selected by turning off the LEDs in certain sections of the housing. This allows flexibly adapting the positions and shapes of the dark backgrounds 110 to positions of movable imaging units 108.

In some embodiments, the inner surface of the tunnel-shaped housing 102A is configured as a light emitting device that emits light in a sinusoidally changing fringe pattern, so that the intensity of the light varies sinusoidally along the illumination surface. The direction of this fringe pattern as well as the wavelength of this sinusoidal change and the colour or wavelength of the light may vary. Alternatively, the light intensity emitted by said light emitting device can be homogenous or inhomogeneous in space and time. For instance, illumination might be changed in a fractal-like manner. The particular illumination may be selected dependent of the properties of the specific defect types that needs to be detected.

Any defects in the target object become visible when a light beam from at least one light source that is aimed at the target object is reflected by a defect in the target object towards one of the imaging units 108. The reflected light beam projects against the at least one dark background 110 as scattered light which is imaged by the at least one imaging device 108. A computing unit detects and locates the scattered light against the at least one dark background 110 from the image taken by the at least one imaging device 108. The computing unit processes the obtained information, e.g. using edge computing or remote data centres, a server being a local or remote server and in open or closed network.

Optionally, imaging units 108, light sources 109 and dark backgrounds 110 may be provided on both sides of the opening 104, so that the transparent object is illuminated from both sides and images are captured from both sides.

A system 100 according to the claimed invention optionally may acquire high-resolution images to visualize even very small defects in the transparent object. To make this happen, special light and camera orientation is applied. Preferably, the tested objects are smaller than the acquisition area, and it is ensured that a tested object is at the inspection position and, thus, within the field of view of at least one imaging unit 108 every time it passes through the tunnel. If the acquisition area is an opening 104, optionally, the opening can have a transparent cover, so that the transparent object can be positioned on the opening 104 although being smaller than the opening. Alternatively, transfer means may be provided that move the transparent object to its inspection position at the acquisition area, wherein the transfer means are configured to hold the transparent object at its edges, thereby neither blocking the view of the imaging units 108 or the light from the light sources. Optionally, the transparent objects may be provided in a frame that allows the transfer means to hold the objects. The transfer means may include generally known means for moving objects, for instance robotic arms with gripping devices or suction pads, conveyer belts or slides.

The proposed solution is related to dark field imaging, wherein each of one or more imaging units (e.g., cameras) that capture images of the transparent object looks through the object at a dark background, so that no light is visible in the captured images if the object has no defects. Plain or structured light can be emitted at the object from all possible directions that do not lie in the field of view of the camera. If light is visible in one or more of the images, this indicates the presence of a defect.

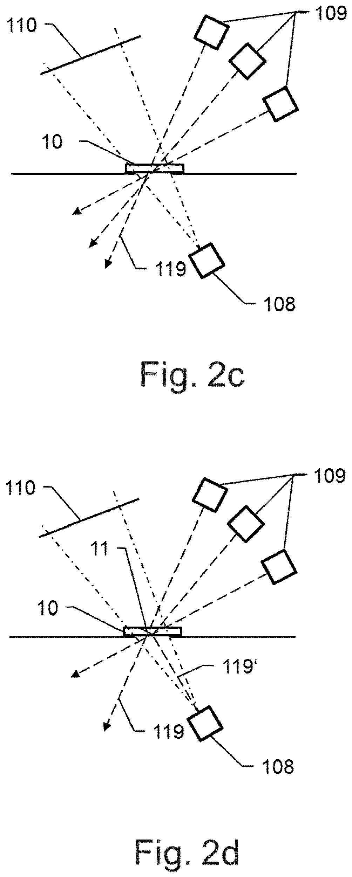

Figures 2a to 2d show a simplified view on an exemplary embodiment of the system according to the invention to illustrate the general working principle. As shown in Figure 2a, an imaging unit 108 and a dark background 110 are positioned at opposite sides of an opening 104 on which a transparent object may be positioned for optical inspection. A number of light sources 109 are provided. As shown in Figure 2b, the light sources 109 are positioned and oriented so that the emit light 119 into the direction of the opening 104 and, thus, through the opening. They are also positioned and oriented so that no light is emitted directly onto the imaging unit 108 or the dark background 110. The dark background 110 completely fills the field of view 118 of the imaging unit 108 behind the opening 104. Figures 2c and 2d show a transparent object 10 being positioned on top of the opening 104. In Figure 2c, the transparent object 10 is flawless (has no defects), so that the light 119 emitted from the light sources 109 passes through the object 10 without any noteworthy deviations (e.g., deflections). In Figure 2d, the transparent object 10 has a defect 11 that causes scattered light 119' to be deflected. If the respective light source 109 has the correct angle relative to the imaging unit 108, the scattered light 119' will arrive at the imaging unit 108, thus being visible in an image captured by the imaging unit 108.

In the shown embodiment, the imaging unit 108 is arranged at an oblique angle relative to the target object 10, i.e., its imaging axis deviates from a right angle relative to a longitudinal axis of the target object 10. Although, in the shown example there is only one imaging unit 108, providing more imaging units with different angles relative to the object allows detecting different kinds of defects effecting different deflecting angles. If more than one imaging unit 108 is used for capturing images of the same object 10, at least a subset of these imaging units 108 should be arranged with an oblique angle, in particular so that an angle of the imaging axis relative to the target object deviates from the right angle by at least 5°.

Preferably, a multitude of light sources 109, e.g., at least ten light sources, are provided that illuminate the target object 10 from a plurality of different angles - e.g., at least ten different angles.

The at least one dark background 110 may be either black or of a single dark colour, a mix of dark colours, a monochrome of dark colours or a gradient of dark colours. Optionally, super-black coatings may be used for the dark backgrounds, such as Vantablack etc. However, the at least one dark background 110 is not limited to the aforementioned examples and can comprise other methods and styles as well.

Figures 3a and 3b show two images 12 captured by the imaging unit 108 of Figures 2c and 2d. In Figure 3a the imaging unit 108 captures an image of the flawless object of Figure 2c. The image 12 is dark, due to the dark background behind the object. In Figure 3b the imaging unit 108 captures an image of the defect object of Figure 2d. Due to the dark background, most of the image 12 is dark. A single bright spot 120 indicates the presence of a defect that has deflected light onto the imaging unit. A computing unit may automatically detect and locate the bright spot 120 in the image 12 and interpret it as a defect in the inspected transparent target object.

Of course, the image being dark does not mean that no light at all is present in the dark areas, since light can be present in the camera image 12 as background noise, or from minimal deflection from transparent objects without defects. However, such light will appear in a more or less homogenous manner, whereas the bright spot 120 clearly stands out. The computing unit is configured to distinguish between background noise and bright spots 120 as they would be generated by defects in the transparent object.

Optionally, the computing unit may provide - based on the position of the bright spot 120 in the image 12 - feedback regarding the position of the defects, e.g., to facilitate error diagnostics in the production of the transparent objects. Optionally, the computing unit may also be configured to detect the kind of the defects and provide respective feedback. Detecting the kind of defect, on the one hand, may include detecting a size and shape of the bright spot 120. On the other hand, it may include detecting an angle of reflection effected by the defect. To detect the angle of reflection, the specific light source or light sources the light of which forms the bright spot 120 need to be identified. To allow this identification, each light source may emit light in a different wavelength (colour) and the computing unit detects this wavelength in the image, and/or each light source may emit light at a different point in time, and the imaging unit captures images at each of the different points in time.

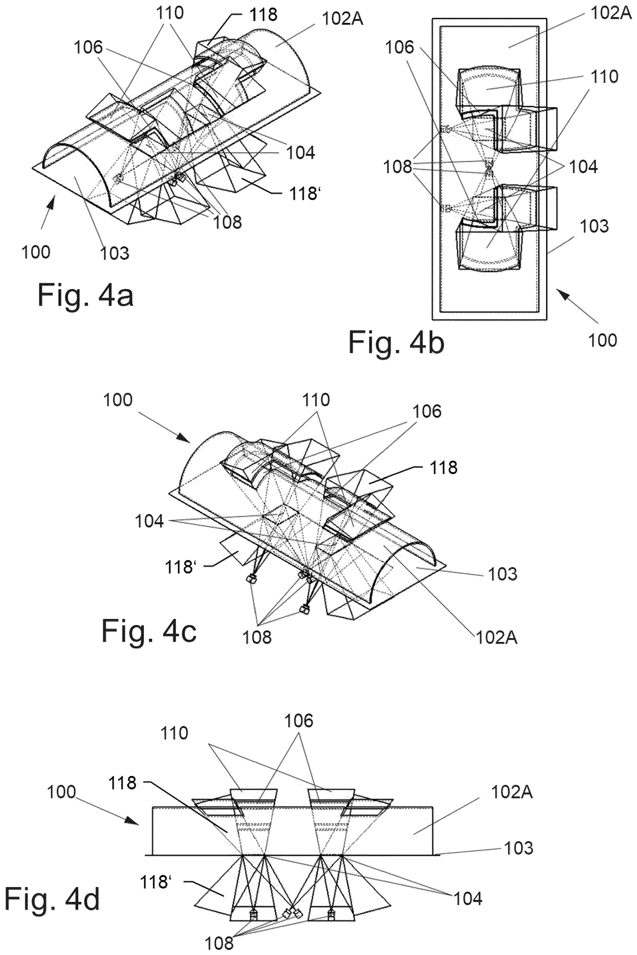

Figures 4a to 4d illustrate isometric views on the first exemplary embodiment of the system 100, wherein the fields of view 118 of the imaging units 108 (through the openings 104) are shown. The dark backgrounds 110 lie in these fields of view 118 to render the background in an image of the object dark. Also, reflected fields of view 118' are shown. In case that the transparent object has a partially reflective surface, the camera field of view is reflected by the object surface up to some proportion. Since these reflected fields of view 118' also influence the captured image of the object, no light sources are provided in the reflected fields of view 118'.

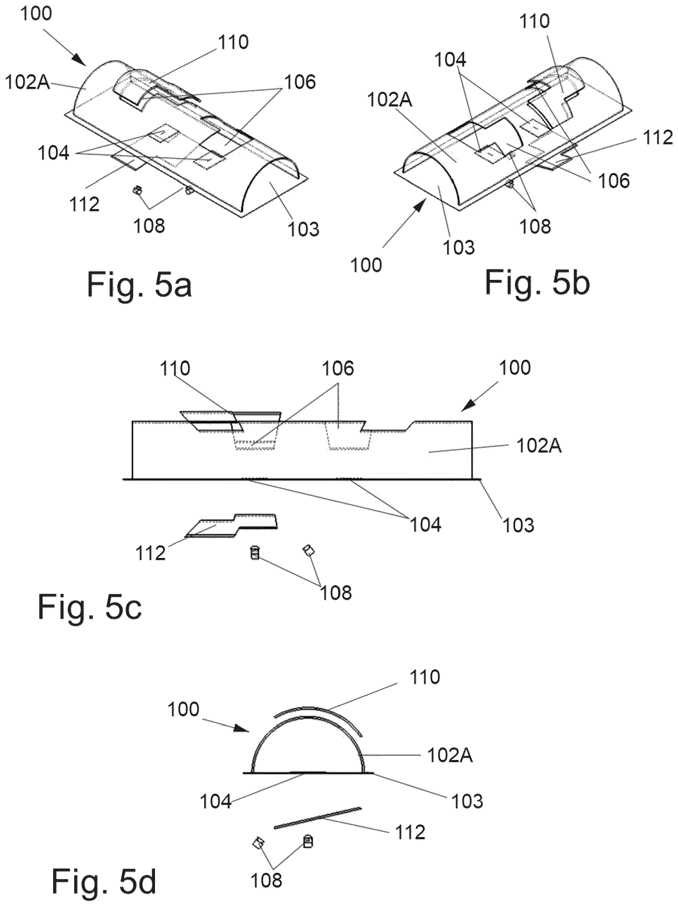

Figures 5a to 5d illustrate isometric views a second exemplary embodiment of a system 100 according to the invention. In this embodiment, the system 100 additionally comprises a dark background 112 below the tunnel-shaped housing 102A, i.e. on the same side of the opening 104 as the imaging units 108.

Optionally, at least one light source can be on the same side as the imaging units 108 and arranged so that a light beam produced by the respective light source and aimed towards the target object is reflected by the target object and is imaged by the at least one imaging device 108.

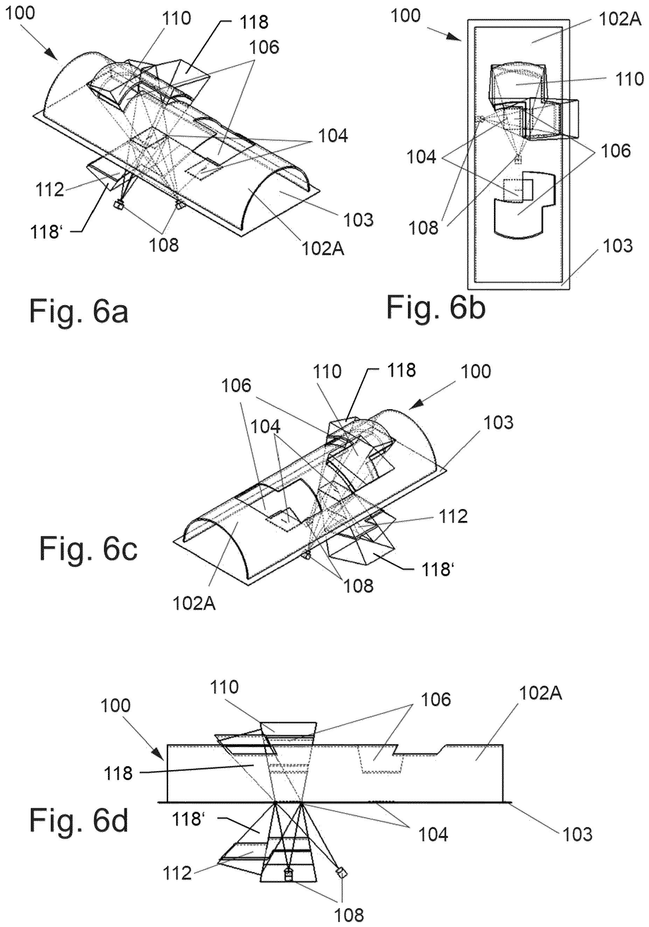

Figures 6a to 6d illustrate isometric views on the second exemplary embodiment of the system 100, wherein the fields of view 118 of the imaging units 108 (through the openings 104) are shown. As can be seen here, dark backgrounds 112 below the tunnel-shaped housing are arranged and shaped so that they lie in the reflected fields of view 118' of the imaging units 108, thereby ensuring that even if the transparent object has a partially reflective surface, no ambient light is visible in the image of the object and that the background of the image remains dark.

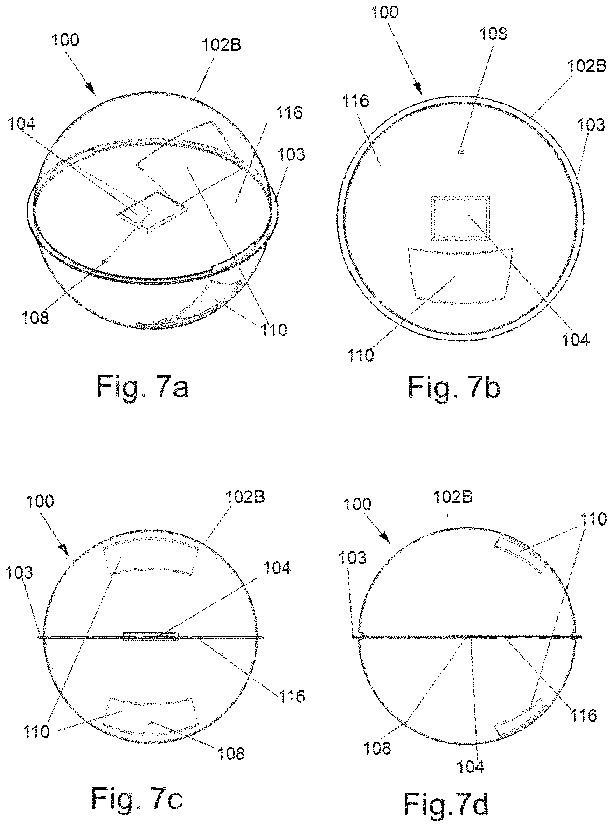

Figures 7a to 7d illustrate isometric views on a third exemplary embodiment of a system 100 according to the invention, the system being configured for inspecting transparent target object objects and for detecting defects in these objects. In contrast to the first and second embodiments, it has a spherical housing 102B.

A base 103 divides the sphere in two parts that optionally have the same size. The base 103 has an opening 104 through which at least one imaging unit 108 images the target object. A black shade 116 may be applied to the base 103. The at least one imaging device 108 may be either fixed or movable. If there are at least two or more imaging units 108, they can be both fixed and/or movable. The at least one imaging device 108 has an oblique angle in relation to the perpendicular black shade 116, particularly an angle greater than five degrees (5°) - i.e. its imaging axis has an angle smaller than 85°. For instance, the at least one imaging unit 108 can be positioned behind the illuminative surface imaging through the illuminative surface. Alternatively, the at least one imaging unit 108 can be positioned on the inner surface and image the target object directly.

The spherical housing 102B may have an illuminative inner surface and openings for transfer means. These transfer means are used to carry a transparent target object inside the spherical housing 102B for inspection and outside the spherical housing 102B after inspection. The illuminative surface can emit light in a uniform manner or have patterned illumination. If the spherical housing 102B has an illuminative inner surface, the illuminative surface may be either on both sides of the spherical housing 102B separated by the black shade 116, or only on one of the sides of the of the spherical housing 102B.

On the same side of the black shade 116 as the at least one imaging device 108 there is at least one dark background 110 that shades areas of the sphere preventing falsely produced shine due to a reflection of light in a faultless transparent object. The dark background for instance may have a reflectance of less than 0.5 The at least one dark background 110 can be either fixed and/or movable inside the sphere. In relation to at least one imaging unit 108, on the opposite site of the said imaging unit 108 there is at least one dark background 110 that prevents perpendicular light from being imaged by the at least one imaging unit 108.

In a preferred embodiment, multiple, e.g., four, imaging units are provided inside or on the inner surface of the spherical housing 102B in the lower part of the sphere. The imaging units 108 are placed at different angles in relation to each other and the target object. In the same embodiment, there is at least one dark background 110 in the upper part of the sphere, the at least one dark background 110 in the shape that the imaging units 108 below have their field of view completely filled by the at least one dark background 110.

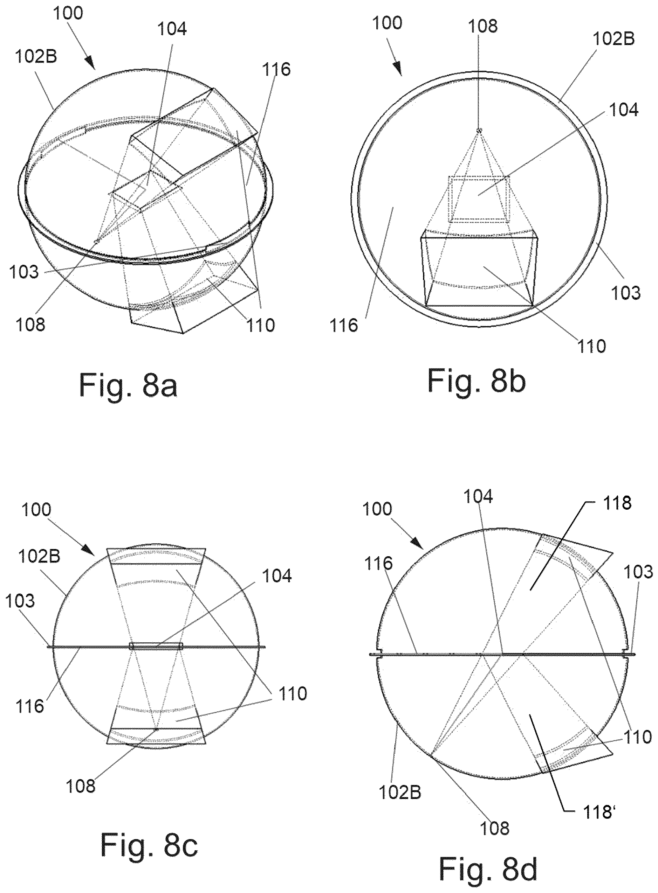

Figures 8a to 8d illustrate isometric views on the third exemplary embodiment of the system 100, wherein the fields of view of the imaging units 108 and the light cones emitted through the openings 104 are shown.

The aforementioned embodiments comprising tunnel-shaped and spherical housings 102A, 102B are concrete examples of possible versions of the system 100. However, the shape of the system 100 and/or its housing 102A, 102B is not limited to the aforementioned examples. For instance, the housing could be dome-shaped or half-spherical, cylindrical, cubical or prismatic (horizontal or upright), or irregularly shaped.

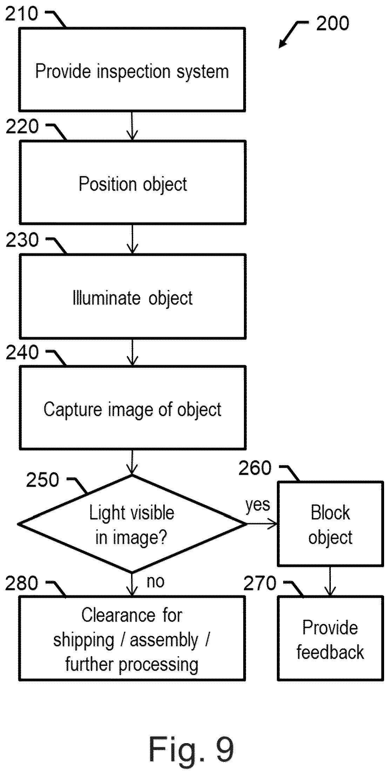

Figure 9 shows a flow-chart illustrating an exemplary embodiment of a method 200 according to the invention for inspecting transparent target object for defects. The inspection can be performed subsequent to the object's production and/or in an assembly line in which a product comprising the object is assembled. An inspection system is provided 210. In particular, the provided inspection system can be or can comprise a system according to one of the three exemplary embodiments described above. The inspection system has at least one imaging device, at least one light emitting device and at least one dark background. The background is positioned in relation to the imaging device so that the field of view of the imaging device is covered by the at least one dark background when imaging a transparent target object. The light emitting devices are positioned so that no light is emitted onto the imaging device.

Next, the transparent target object is positioned 220 at an inspection position within the inspection system between the imaging unit and the dark background, for instance on an opening. Positioning 220 may involve an automatized subsequent movement of a plurality of similar objects to and away from the inspection position, for example by means of a robot arm or a conveyer.

The transparent target object is illuminated 230 by the at least one light source. If the object has no defects the light will pass through the object. Defects however will deflect scattered light from one or more of the light sources onto at least one imaging unit.

The imagining unit captures 240 one or more images of the illuminated object. A computing unit examines the images to detect 250 whether scattered light is visible in one of the images - the images being otherwise dark due to the dark background. If such scattered light is visible in one or more images of an object, the computing unit determines that the object has a defect. The object is then blocked 260. Depending on the object and its purpose, this can mean that it is discarded, excluded from an assembly line, scheduled for revision etc. Alternatively or additionally, information regarding the defect may be provided 270 as feedback to a user of the system or to a server, e.g., for statistical purposes or to adapt the production.

If no scattered light is visible in the images, the computing unit determines that the object has no defects and clears 280 the object, e.g. for next steps in an assembly line or for shipping. For instance, these steps could comprise packaging the object for sale or transport, assembling a product comprising the object, or further processing the object.

If the computing unit has determined that the object has defects, it may provide feedback 270 regarding the determined defect, for instance for statistical purposes, or to take measures in case of a cumulation of defects, e.g., to recalibrate a production machine and/or to halt the production. This feedback may comprise not only the information that a defect has been discovered, but also details about the defect. Detection of the defect in these case also comprises determining a position of the defect in the object and/or a kind of defect. These information may be used to determine error patterns in the production and/or to recalibrate machines producing the objects. The position of the defect may be deduced from the position of scattered light being visible in one of the images. The kind of the defect may be deduced from a size and shape of the scattered light in the images. Also, depending on a configuration of the light sources, a deflection angle effected by the defect can be deduced. For instance, if the light sources are configured to emit light with different wavelengths and the relative position of each light source is known, then the deflection angle is derivable from the wavelength of the scattered light in the images. Alternatively, if the light sources are configured to emit light at different points in time, the imaging unit captures an image at each point in time and the relative position of each light source is known, then the deflection angle is derivable from a timestamp of the image.

Consequently, a skilled person may on the basis of this disclosure and general knowledge apply the provided teachings in order to implement the scope of the present invention as defined by the appended claims in each particular use case with necessary modifications, deletions, and additions.

## Claims

1. Inspection system (100) for detecting defects (11) in a transparent object (10), the system comprising at least one imaging unit (108), one or more light sources (109) and at least one dark background (110) that are arranged around an inspection position for inspection of the transparent object (10), wherein
- the one or more light sources (109) are configured emit light (119) to illuminate the transparent object (10) at least from a first side of the object when the object is positioned at the inspection position;
- the at least one imaging unit (108) is configured and arranged relative to the inspection position to capture one or more images (12) of the transparent object (10) from a second side of the transparent object when the transparent object is positioned at the inspection position, and configured to generate image data; and
- the at least one dark background (110) is arranged so that the inspection position lies between the at least one imaging unit (108) and the at least one dark background (110);
wherein the system (100) comprises a computing unit configured to receive the image data and to detect, in the image data, one or more indications of scattered light (109') deflected from a defect (11) in the transparent object (10).

2. Inspection system (100) according to claim 1, comprising a base (103) having an opening (104), wherein
- the inspection position is at the opening (104), in particular on top of the opening;
- the imaging unit (108) is configured and arranged so that the opening (104) lies in a field of view of the imaging unit (108);
- the dark background (110) is formed and arranged so that it fills the field of view of the imaging unit (108) through the opening (104); and
- the one or more light sources (109) are configured and arranged so that no light (119) is emitted directly onto the imaging unit (108).

3. Inspection system (100) according to claim 2, wherein
- the base (103) comprises at least two openings (104), each opening providing one inspection position;
- one or more imaging units (108), particularly at least two imaging units (108), are assigned to each opening (104) and configured and arranged so that the respective opening (104) lies in a field of view of each of the assigned imaging units (108), wherein each of the assigned imaging units (108) is arranged at a different angle relative to the respective opening (104); and
- one or more dark backgrounds (110) are assigned to each opening (104) and formed and arranged so that the one or two dark backgrounds (110) fill the fields of view of the two imaging units (108) through the respective opening (104), particularly wherein one dark background is assigned to each of the one or more imaging units (108).

4. Inspection system (100) according to claim 2 or claim 3, wherein the dark background (110) and at least a subset of the one or more light sources (109) are positioned on a first side of the base (103), particularly above the base (103), and the imaging unit (108) is positioned on a second side of the base (103), particularly below the base (103).

5. Inspection system (100) according to any one of claims 2 to 4, comprising a housing (102A, 102B), the housing having an inner surface and defining an interior, wherein at least the one or more light sources (109), the dark background (110) and the inspection position are positioned in the interior, in particular wherein
- the imaging unit (108) is positioned in the interior, particularly provided on the inner surface; and/or
- the light sources (109) are provided on the inner surface; and/or
- the dark background (110) is provided on the inner surface.

6. Inspection system (100) according to claim 5, wherein the light sources (109) are configured as an illumination structure on the inner surface, in particular wherein the illumination structure provides
- continuous and uniform illuminance,
- illumination only to specific parts, and/or
- illumination in changing patterns, particularly in sinusoidally changing fringe patterns,
particularly wherein the illumination structure comprises a plurality of light emitting diodes and/or is configured as an LED screen.

7. Inspection system (100) according to claim 6, wherein the illumination provided by the illumination structure can be selected by the computing unit and/or a user of the system (100), particularly wherein
- selecting the illumination comprises selecting between continuous and uniform illuminance and illumination only to specific parts;
- selecting the illumination comprises selecting the patterns;
- selecting the illumination comprises selecting certain parts of the illumination structure to emit light in a different wavelength and/or at different points of time; and/or
- the dark background (110) is a part of the illumination structure in which part the illumination is turned off.

8. Inspection system (100) according to any one of claims 5 to 7, wherein
- the housing (102A, 102B) comprises a recess (106) extending away from the interior, and
- the dark background (110) is provided on an inner surface of the recess (106),
particularly wherein the recess (106)
- is configured as an indentation or as an opening in the housing (102A, 102B); and/or
- is configured and arranged so that no light is emitted directly from the one or more light sources (109) onto the dark background (110).

9. Inspection system (100) according to any one of claims 5 to 8, wherein
- the housing is a tunnel-shaped housing (102A) or a dome-shaped housing, the base (103) forming a bottom of the housing; or
- the housing is a spherical housing (102B), the base (103) dividing the interior into a top part and a bottom part.

10. Inspection system (100) according to any one of the preceding claims,
wherein
- the system comprises transfer means configured to move the transparent object (10) to the inspection position, particularly wherein the transfer means comprises a robot arm and/or a conveyor; and/or
- the imaging unit (108) is configured to move relative to the inspection position, particularly at least by rotating about its imaging axis, and to capture images of the transparent object (10) from a plurality of poses.

11. Inspection system (100) according to any one of the preceding claims,
wherein
- the imaging unit (108) is a camera;
- the one or more light sources (109) comprise a plurality of light emitting diodes; and/or
- the dark background (110) comprises one of a sheet, a slate or a screen.

12. Inspection system (100) according to any one of the preceding claims,
wherein the dark background (110) comprises a computationally or manually controllable display or a smart screen that is configured to adjust itself in relation to a surrounding illuminance.

13. Computer-implemented method (200) for detecting defects (11) in a transparent object (10) using an inspection system (100), the inspection system comprising an imaging unit (108), one or more light sources (109) and a dark background (110) that are arranged around an inspection position, wherein the method (200) comprises:
- positioning (220) the transparent object (10) at the inspection position;
- illuminating (230) the transparent object (10) from at least a first side using the one or more light sources (109);
- capturing (240) one or more images (12) of the transparent object (10) from a second side, wherein the dark background (110) is visible through the transparent object (10) in the one or more images (12); and
- determining (250), by a computing unit, whether scattered light (120) is visible in the one or more images (12), the scattered light (120) being indicative of a defect (11) in the transparent object (10).

14. Method (200) according to claim 13, wherein the inspection system (100) is an inspection system according to any one of the preceding claims, particularly wherein
- the computing unit is a part of the inspection system (100), and/or
- the method comprises providing (210) the inspection system (100).

15. Method (200) according to claim 13 or claim 14, wherein, if it has been determined (250) that scattered light (120) is visible in the one or more images (12), the computing unit
- marks (260) the transparent object as blocked, to be discarded, to be excluded from an assembly line, and/or to be scheduled for revision; and/or
- provides (270) feedback regarding the defect (11) to a user of the system.
